# EUROPÄISCHE PATENTANMELDUNG

(11) **EP 1 076 452 A2**
(43) Veröffentlichungstag der Anmeldung: **14.02.2001**
(21) Anmeldenummer: 00116951.5
(22) Anmeldetag: 07.08.2000
(51) Int. Cl.: H04N 1/333

(54) **Ortsadaptive Bildkompression**

(30) Priorität: 12.08.1999 DE 19938320
(71) Anmelder: Robot Foto & Electronic GmbH & Co KG, D-40597 Düsseldorf (DE)
(72) Erfinder: Kachant, Ralf, 31141 Hildesheim (DE); Kuester, Hans-Holger, 31061 Alfeld (DE)
(74) Vertreter: Weisse, Jürgen, Dipl.-Phys.

(57) **Zusammenfassung**

Die Erfindung betrifft eine Vorrichtung zur Bildspeicherung mit einem Kompressionscoder (56) und -decoder (64) zum Speichern von Bilddaten (32) in einem komprimierten bzw. dekomprimierten Datenformat in einem Bilddatenspeicher (54). Weiterhin betrifft die Erfindung ein Verfahren zur Speicherung von Bilddaten (32) in einem komprimierten bzw. dekomprimierten Datenformat in einem Bilddatenspeicher (54) einer Vorrichtung zur Bildspeicherung mit einem Kompressionscoder (56) und - decoder (64) zum Komprimieren bzw. Dekomprimieren der Bilddaten (32).

## Beschreibung

### Technisches Gebiet

Die Erfindung betrifft eine Vorrichtung zur Bildspeicherung mit einem Kompressionscoder und/oder -decoder zum Speichern von Bilddaten in einem komprimierten und/oder dekomprimierten Datenformat in einem Bilddatenspeicher.

Weiterhin betrifft die Erfindung ein Verfahren zur Speicherung von Bilddaten in einem komprimierten bzw. dekomprimierten Datenformat in einem Bilddatenspeicher einer Vorrichtung zur Bildspeicherung mit einem Kompressionscoder und -decoder zum Komprimieren bzw. Dekomprimieren der Bilddaten.

### Stand der Technik

Verkehrsüberwachungsanlagen werden dazu eingesetzt, um Verkehrsübertretungen, wie beispielsweise Geschwindigkeitsüberschreitungen oder Überfahren von Kreuzungen bei Rotlicht zu überwachen. Solchen Verkehrsüberwachungsanlagen nehmen von jedem Verkehrssünder bzw. dessen Fahrzeug ein Bild von seinem Fehlverhalten auf. Durch die Vielzahl der Verkehrssünder müssen entsprechend viele Bilder verarbeitet werden. Dies wird bei herkömmlichen Anlagen mit Filmnegativen bewältigt und stellt die Betreiber häufig vor große Mengen an Filmmaterial, die nicht einfach zu verarbeiten und auszuwerten sind.

Um das Bildmaterial besser verarbeiten zu können, wird immer öfter auf digitale Kameras bei solchen Verkehrsüberwachungsanlagen gesetzt. Dies hat den Vorteil, daß die digitalen Daten direkt verarbeitet werden können. Da kein Filmnegativ bei Digitalkameras notwendig ist, wird nicht nur bei der Filmentwicklung gespart, sondern auch bei der Auswertung und Verarbeitung des Datenmaterials bis hin zum Versenden des Busgeldbescheids durch Automation. Aber auch bei diesen Verkehrsüberwachungsanlagen sind kapazitive Grenzen bzgl. der Bildmengen gesteckt.

Aus der digitalen Bildverarbeitung sind verschiedene Methoden der Bildkompression bekannt. Es sind Kompressionsformate bekannt, bei denen das Bild komprimiert wird und bei der Dekompression der ursprüngliche Zustand wieder hergestellt wird. Diese Datenkompression liefert jedoch kein hinreichendes Ergebnis. Die Bilddaten verbrauchen eine großes Quantum Arbeitsspeicher, der eine solche digitale Bildverarbeitung nicht mehr wirtschaftlich macht.

Zur Kompression von digitalen Bildern werden daher Verfahren verwendet, die eine für das menschliche Auge möglichst gleichmäßige Bildqualität über die gesamte Bildfläche gewährleisten sollen. Hier sei zum einen das JPEG-, GIF- und das TIF-Format genannt, welche auch im "Internet" nicht selten zur Versendung von Bilddaten verwandt werden.

Diese Kompressionsverfahren sind weitestgehend standardisiert und in entsprechender Literatur beschrieben, weswegen hier nicht auf nähere Details eingegangen wird. Bei diesen Kompressionsverfahren ist auch ein mehrstufiges Verfahren bekannt, die beginnend mit einer schlechten Bildqualität in Schritten zu der in der codierten Bildinformation maximal enthaltenen Bildqualität verwenden. Nachteilig wirken sich diese Kompressionverfahren nur auf den Bildinformationsgehalt aus. Das komprimierte Bild verliert, je höher der Kompressionsgrad ist, um so mehr Informationen. Dies ist bei normalen Bildern für das menschliche Auge auch nicht weiter problematisch, da das Gehirn des Menschen gewöhnt ist, Bilder zu vervollständigen bzw. Farbverläufe zu integrieren, sofern diese nicht zu große Differenzen aufweisen.

Solche Kompressionenverfahren werden daher auch erfolgreich bei Verkehrsüberwachungsanlagen mit Digitalkameras eingesetzt, um die Datenmengen zu reduzieren. Jedoch können durch den geschilderten Informationsverlust manche Bilder durch Überstrahlung oder dergleichen nicht, insbesondere bei der Automation, verwertet werden. Auch vor Gericht können wichtige Informationen von Bildbestandteilen durch die Kompression verloren gegangen sein, so daß sie als Beweismittel nicht mehr in Betracht gezogen werden können.

### Offenbarung der Erfindung

Aufgabe der Erfindung ist es daher eine Vorrichtung oder ein Verfahren zur Bildkompression zu schaffen, bei der oder dem der Kompressionsgrad und gleichzeitig der Informationsgehalt der Bilddaten möglichst hoch ist.

Erfindungsgemäß wird die Aufgabe dadurch gelöst, daß bei einer Vorrichtung der eingangs genannten Art der Kompressionscoder und/oder -decoder Mittel aufweist, um Datenfelder der Bilddaten unterschiedlich zu komprimieren bzw. zu dekomprimieren.

Weiterhin wird die Aufgabe durch ein Verfahren der eingangs genannten Art gelöst, bei dem Datenfelder der Bilddaten unterschiedlich komprimiert bzw. dekomprimiert werden.

Die Erfindung beruht auf dem Prinzip, daß bei vielen Bildern bestimmte Bildbestandteile wichtig sind und andere wiederum nicht. Gerade bei Fotos von Verkehrssündern, die mit entsprechenden Verkehrsüberwachungsanlagen aufgenommen worden sind, sind viele Bildbestandteile unwichtig. Es kommt dabei häufig nur auf den Bestandteil an, wo das Fahrzeug mit Kennzeichen und der Fahrer zu erkennen sind. Die übrigen Bildbestandteile erscheinen, da schon eher für die spätere Auswertung, unwichtig.

Da bei solchen Fotos von Verkehrsüberwachungsanlagen immer nur dieselben Bildausschnitte relevant sind, können diese Fotos problemlos in wichtige und unwichtige Bildbereiche oder Felder aufgeteilt werden. Bei den durch die Digitalkamera aufgenommenen digitalen Bildern läßt sich diese Erkenntnis dazu verwenden, daß die verschiedenen Felder unterschiedlich stark komprimiert werden. Jedem Datenfeld wird daher ein Gewichtungsgrad für die spätere Kompression zugeordnet. So kann der Bildbereich des Fahrzeugführers und des Kennzeichens hohe Gewichtung erhalten. Die entsprechenden Datenfelder werden weniger oder gar nicht komprimiert. Die übrigen Bildbereiche erhalten einen geringeren Gewichtungsgrad und werden dementsprechend hoch komprimiert. Man erhält auf diese Weise eine ortsadaptive Bilddatenkompression. Diese erfindungsgemäße Vorrichtung ist nicht auf Verkehrsüberwachungseinrichtungen beschränkt, sondern läßt sich praktisch überall in der digitalen Bildverarbeitung einsetzen, wo wichtige und weniger wichtige Bildbestandteile vorkommen, wie beispielsweise die auch die Raumüberwachung mit digitalen Kameras.

Mit diesem Verfahren kann das Bild optimal bei bester Qualität komprimiert werden. Die komprimierten Dateien enthalten nur noch für die wichtigsten Bildbereiche sämtliche Informationen. Sie werden quasi bei der Kompression ausgespart bzw. weniger stark komprimiert, um in diesen Bildbereichen keine Informationsverluste zu erhalten. Das Verfahren läßt praktisch sich auf alle Bereiche der digitalen Bildverarbeitung anwenden.

Als vorteilhafte Ausgestaltung der Erfindung hat sich erwiesen, wenn der Kompressionscoder und -decoder als Rechnereinheit ausgebildet ist. Dadurch läßt sich die Kompression und Dekompression über eine einzige Einheit bewerkstelligen. Ein entsprechendes Kompressions- und Dekompressions-Programm kann in der Rechnereinheit installiert werden. Außerdem kann die Rechnereinheit auch zur weiteren Bildverarbeitung herangezogen werden.

Wie bereits beschrieben, fallen besonders bei Verkehrsüberwachungsanlagen große Bilddatenbestände an, bei denen nur bestimmte Bildbestandteile von Bedeutung sind. Die erfindungsgemäße Bildspeichereinrichtung eignet sich daher besonders für solche Verkehrsüberwachungseinrichtungen.

Für das erfindungsgemäße Verfahren bestehen vorteilhafterweise zwei Möglichkeiten der Kompressionsgewichtung. Zum einen kann der Kompressionsgrad der Datenfelder fest und zum anderen kann der Kompressionsgrad der Datenfelder durch bestimmte Bilddaten vorgegeben sein. Bei der festen Vorgabe der Kompressionsgrade werden bei allen Bildern immer dieselben Bildausschnitte komprimiert bzw. von einer starken Kompression ausgenommen. Dann wird quasi eine Kompressionsgrad-Maske über das Bild gelegt. Diese feste Vorgabe macht z.B. bei Bildern von Verkehrsüberwachungsanlagen Sinn, weil hier immer das gleiche Bild, nur mit unterschiedlichen Fahrzeugen, erfaßt wird.

Manchmal kann aber die Notwendigkeit bestehen, die Bildausschnitte örtlich zu variieren, die weniger oder gar nicht komprimiert werden. Sie lassen sich unter Umständen nicht von einer starren Maske abdecken, weil der Bereich von Bild zu Bild an einer anderen Stelle liegt. Hier kommt es dann von Bild zu Bild darauf an, welche Datenfelder für eine Kompression ausgewählt werden, und welche nicht. Bei solchen Bildern muß dann jedesmal neu entschieden werden, welche Bereiche wie komprimiert werden. Die Erfassung von Personenkraftwagen (PKW) und Lastkraftwagen (LKW) kann eine solche Variation bereits schon notwendig machen. Der Fahrer eines LKWs sitzt um einiges höher als bei einem PKW. Der entsprechende Bildausschnitt muß dazu mal weiter oben und mal weiter unten liegen.

Weitere Vorteile ergeben sich aus dem Gegegenstand der Unteransprüche.

### Kurze Beschreibung der Zeichnung

- Fig. 1: zeigt ein typisches Bild einer Verkehrsüberwachungseinrichtung mit wichtigen und weniger wichtigen Bildbestandteilen.
- Fig. 2: zeigt ein Bild, wie in Fig. 1, jedoch ist dieses Bild in Datenfelder unterteilt.
- Fig. 3: zeigt die Kompressionsgewichtung des Bildes von Fig. 2.
- Fig. 4: zeigt den prinzipiellen Verfahrensablauf für die ortsadaptive Kompression und Dekompression eines digitalen Bildes.
- Fig. 5: zeigt schematisch als Blockdiagramm eine erfindungsgemäße Vorrichtung für die ortsadaptive Kompression und Dekompression eines digitalen Bildes.

### Bevorzugtes Ausführungsbeispiel

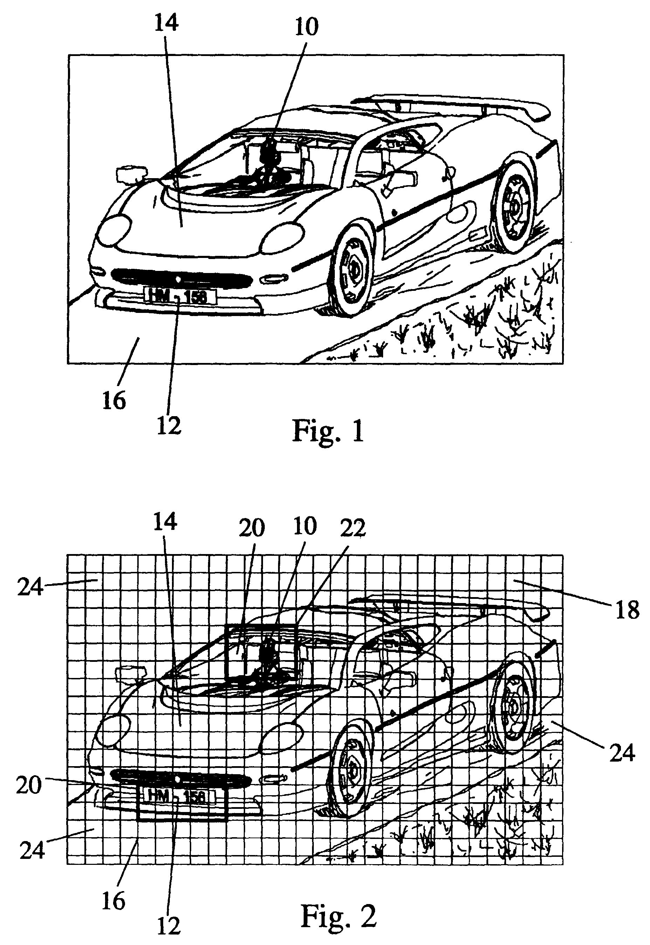

Fig. 1 zeigt ein typisches Bild einer Verkehrsüberwachungseinrichtung. Es enthält wichtige Bildbestandteile - ein Fahrer 10 und ein Kennzeichen 12 - und weniger wichtigen Bestandteile - übriges Fahrzeug 14 und Umgebung 16. Dieses Bild setzt sich aus sogenannten Pixeln zu einer Pixelmatrix zusammen, wobei ein Bild beispielsweise aus 400 x 300 Pixeln besteht. Die Anzahl Pixel pro Fläche bestimmt letztendlich auch die Auflösung eines Bildes. Jeder Pixel enthält einen Farb- bzw. Grauwert. Diese Farb- oder Grauwerte, aus denen sich das Bild zusammensetzt, werden als digitale Zahlen in einem Datenspeicher abgelegt. Durch geeignete Kompressions-Algorithmen lassen sich diese Zahlenwerte komprimieren, so daß eine weniger speicherintensive Bilddatei entsteht.

Grundsätzlich arbeiten die Kompressionsverfahren auf dem Prinzip, daß anstelle von sich wiederholende Zahlenwerten die Anzahl dieser Zahlenwerte und der Zahlenwert digital abgespeichert werden. Dadurch wird der verbrauchte Speicher stark reduziert. Durch die Kenntnisse von Farbverläufen und, wie das menschliche Gehirn diese wahrnimmt, können auch geeignete und benachbarte Pixel bzw. Zahlenwerte weggelassen werden, ohne daß der menschliche Betrachter dies erfaßt. Je stärker die Kompression erfolgen soll, um so mehr Bildinformationen gehen dabei in Form von Pixeln bei der späteren Dekompression verloren.

Auf die Kompressions-Algorithmen wird an dieser Stelle nicht weiter eingegangen, da dies Stand der Technik ist und in einschlägiger Literatur, wie z.B. (...) ausführlich beschrieben wird.

In Fig. 2 ist das gleiche Bild, wie in Fig. 1 dargestellt. Dieses Bild ist jedoch durch eine Rasterung in Datenfelder 18 eingeteilt. Jedes Datenfeld 18 enthält eine bestimmte Anzahl an Pixeln bzw. an Farb- oder Grauwerten. Wichtige Datenfelder 20, also wichtige Bildbestandteile 10, 12, sind zur Kenntlichmachung als etwas fetter umrandete Datenfelder 22 dargestellt. Datenfelder 24 von unwichtigen Bildbestandteilen 14, 16 weisen entsprechend keine fette Umrandung auf.

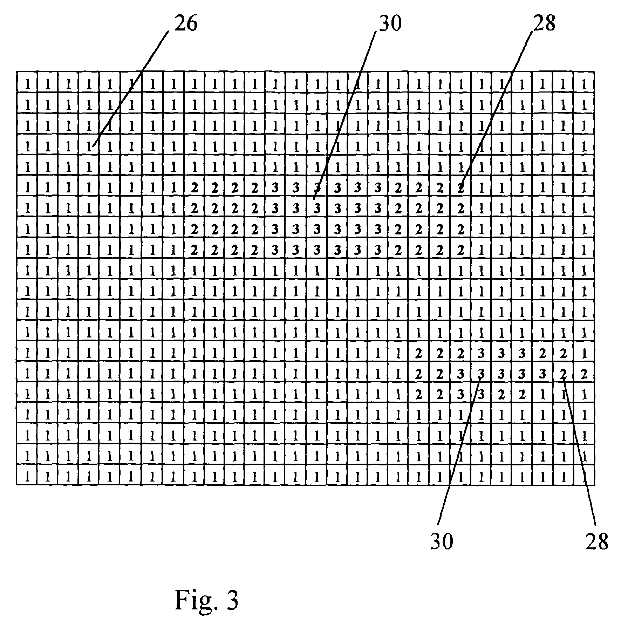

Die Datenfelder 18 werden, wie in Fig. 3 dargestellt, mit einer Kompressionsgewichtung voreingestellt. Diese Kompressionsgewichtung kann für jede Bildaufnahme identisch sein, aber auch für jedes Bild neu definiert werden. In dieser Kompressionsgewichtung von Fig. 3 werden drei Kompressionsstärken vorgenommen. Datenfelder 26 mit der Kompressionsgewichtung "1" steht für eine sehr hohe Kompression. Bei diesen Datenfeldern 26 darf ― durch die Art der Kompression bedingt ― relativ viel Information verloren gehen. Datenfelder 28 mit der Kompressionsgewichtung "2" stehen für eine mittelstarke Kompression. Hier wird gegebenenfalls mehr Bildinformation von relevanteren Bildbestandteilen benötigt. Datenfelder 30 mit der Kompressionsgewichtung "3" stehen für eine sehr geringe oder keine Kompression. Die entsprechenden Bildbestandteile werden für die spätere Verwertung mit ihrem vollen Informationsgehalt benötigt.

Durch die Einteilung des Bildes in Datenfelder 18 und deren Kompressionsgewichtung wird eine ortsadaptive Bildkompression erzeugt.

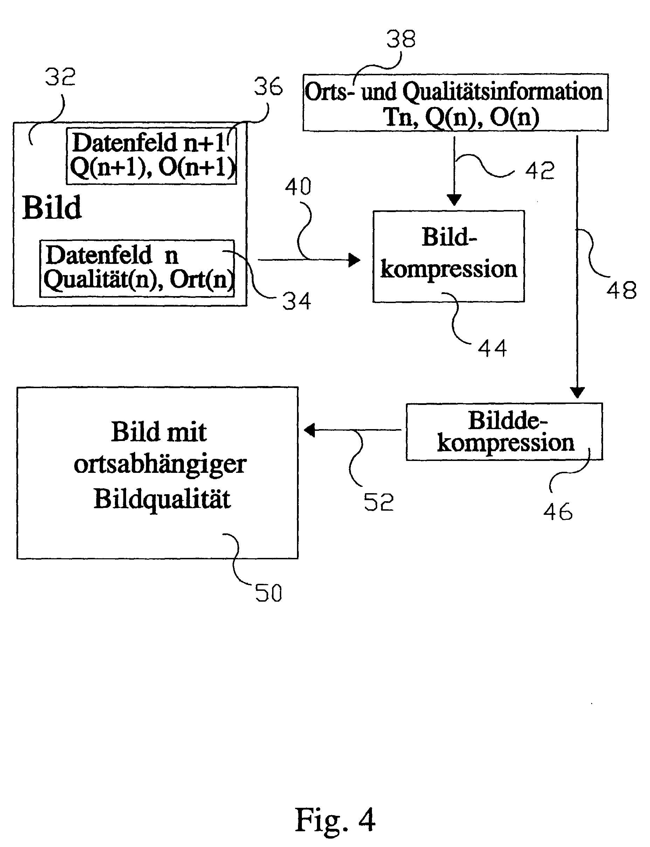

Fig. 4 zeigt den prinzipiellen Verfahrensablauf eines Kompression und Dekompression eines digitalen Bildes 32 mit ortsadaptiver Bildkompression. Ein digitales Bild 32 wird in die Datenfelder 18, wie in Fig. 2, unterteilt. Die Datenfelder 18 werden von 1 bis zur Gesamtanzahl der Datenfelder 18 durchnumeriert. Datenfeld "n" eines Bildbereichs 34 läßt sich eine Koordinate O(n), und Kompressionsgewichtung Q(n) zuordnen. Datenfeld n+1 eines anderen Bildbereiches 36 läßt sich hingegen die Koordinate O(n+1), und Kompressionsgewichtung Q(n+1) zuordnen. Durch Vorgabe einer Funktion Tₙ lassen sich nun für jede Koordinate O(n) und Kompressionsgewichtung O(n) zur Bildkompression 44 einstellen. Die Vorgabe wird mit Block 38 beschrieben. Mit diesen Informationen kann das digitale Bild komprimiert werden. Pfeile 40 und 42 von der Bildinformation 36 und der Kompressionsgewichtung 38 zeigen daher auf den Block 44, der die ortsadaptive Bildkompression 44 symbolisiert.

Die Gewichtungsvorgabe 38 wirkt sich natürlich auch auf die Bilddekompression 46 aus und fließt daher in den entsprechenden Dekompressions-Algorithmus mit ein. Dies wird mit Pfeil 48 angedeutet. Aus dem dekomprimierten Bild wird schließlich ein Bild 50 erzeugt - Pfeil 52, welches eine ortsabhängige Bildqualität aufweist.

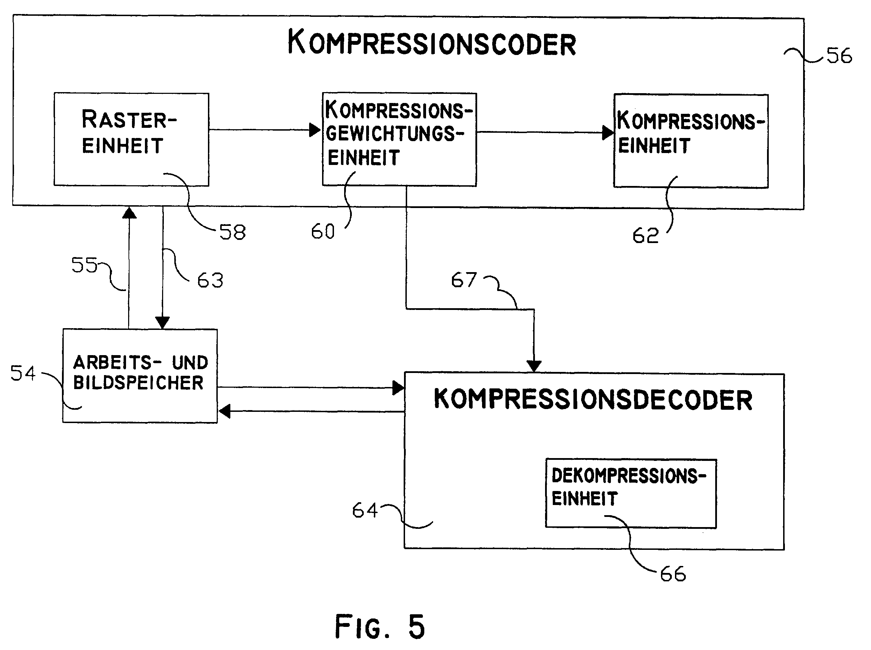

In Fig. 5 wird schematisch als Blockdiagramm eine erfindungsgemäße Vorrichtung für die ortsadaptive Kompression und Dekompression eines digitalen Bildes gezeigt. Diese Vorrichtung arbeitet im Prinzip wie das bereits zu Fig. 4 beschriebene Verfahren. Ein digitales Bild, welches beispielsweise von einer Digitalkamera erzeugt wurde wird in einem Bildspeicher 54 abgelegt. Ein Kompressionscoder 56 kann auf das so gespeicherte Bild zugreifen, Pfeil 55. Der Kompressionscoder 56 enthält neben einer Rastereinheit 58, einer Kompressionsgewichtungseinheit 60 auch eine Kompressionseinheit 62. Die Rastereinheit 58 unterteilt das digitale Bild in geeignete Datenfelder 18. Anschließend werden den Datenfeldern 18 in der Kompressionsgewichtungseinheit 60 Kompressionsgewichtungen zugeordnet. Die Kompressionseinheit 62 komprimiert die Daten entsprechend. Die komprimierten Daten werden nun in dem Arbeitsspeicher 54 zur Weiterverarbeitung abgelegt, Pfeil 63.

In diesem Ausführungsbeispiel ist ein Kompressionsdecoder 64 zusammen mit dem Kompressionscoder 56 in der Bildspeichereinrichtung angeordnet. Der Kompressionsdecoder enthält eine Dekompressionseinheit 66, die die komprimierten Bilddaten wieder dekomprimieren kann. Dazu werden die Kompressionsgewichtungen der Kompressionsgewichtungseinheit 60 der Dekompressionseinheit 64 zugeführt, Pfeil 67. Die dekomprimierten Daten werden wieder in dem Bildspeicher 54 abgelegt. Es sei ausdrücklich angeführt, daß der Dekompressionsdecoder 64 grundsätzlich auch als separate Einheit ausgebildet sein könnte.

## Patentansprüche

1. Vorrichtung zur Bildspeicherung mit einem Kompressionscoder (56) und/oder - decoder (64) zum Speichern von Bilddaten (32) in einem komprimierten und/oder dekomprimierten Datenformat in einem Bilddatenspeicher (54), **dadurch gekennzeichnet, daß** der Kompressionscoder (56) und/oder der -decoder (64) Mittel (58, 60, 62; 66) aufweist, um Datenfelder (18) der Bilddaten unterschiedlich zu komprimieren bzw. zu dekomprimieren.

2. Vorrichtung zur Bildspeicherung nach Anspruch 1, **dadurch gekennzeichnet, daß** der Kompressionscoder (56) und/oder -decoder (64) als programmgesteuerte Rechnereinheit ausgebildet ist.

3. Vorrichtung zur Bildspeicherung nach einem der Ansprüche 1 oder 2, **gekennzeichnet durch** eine Verkehrsüberwachungseinrichtung.

4. Verfahren zur Speicherung von Bilddaten in einem komprimierten bzw. dekomprimierten Datenformat in einem Bilddatenspeicher (54), einer Vorrichtung zur Bildspeicherung mit einem Kompressionscoder (56) und -decoder (64) zum Komprimieren und/oder Dekomprimieren der Bilddaten (32), **dadurch gekennzeichnet, daß** Datenfelder (18) der Bilddaten (32) unterschiedlich komprimiert bzw. dekomprimiert werden.

5. Verfahren nach Anspruch 4, **dadurch gekennzeichnet, daß** der Kompressionsgrad der Datenfelder (18) durch bestimmte Bilddaten (32) vorgegeben wird.

6. Verfahren nach Anspruch 4, **dadurch gekennzeichnet, daß** das Kompressionsgrad der Datenfelder (18) fest vorgegeben ist.
